# EUROPÄISCHE PATENTSCHRIFT

(11) **EP 3 556 691 B1**
(45) Veröffentlichungstag und Bekanntmachung des Hinweises auf die Patenterteilung: **07.06.2023**
(21) Anmeldenummer: 19165175.1
(22) Anmeldetag: 26.03.2019
(51) Int. Cl.: B65G 65/23

(54) **VEREINZELUNGSENTLADER UND VERFAHREN ZUM ENTLADEN UND VEREINZELN VON IN EINEM BEHÄLTER BEREITGESTELLTEN PACKSTÜCKEN**
SEPARATING UNLOADER AND METHOD FOR UNLOADING AND SEPARATING PACKAGES PROVIDED IN A CONTAINER
DÉCHARGEUR SÉPARATEUR ET PROCÉDÉ DE DÉCHARGEMENT ET DE SÉPARATION DES UNITÉS D'EMBALLAGE FOURNIES DANS UN RÉCIPIENT

(30) Priorität: 19.04.2018 DE 102018109355
(43) Veröffentlichungstag der Anmeldung: 23.10.2019
(73) Patentinhaber: Deutsche Post AG, 53113 Bonn (DE)
(72) Erfinder: Hartmann, Bernd, 53501 Grafschaft-Leimersdorf (DE)
(74) Vertreter: Cohausz & Florack

(56) Entgegenhaltungen:
- DE-A1-102009 033 455
- NL-A- 8 301 397
- US-A- 5 641 052
- US-A1- 2007 246 328

## Beschreibung

Die Erfindung betrifft einen Vereinzelungsentlader zum Entladen und Vereinzeln von in einem Behälter bereitgestellten Packstücken, mit einer Schwenkeinrichtung zum Schwenken des Behälters von einer vorwiegend vertikalen Aufnahmeausrichtung zum Aufnehmen des Behälters in eine vorwiegend horizontale Entleerungsausrichtung zum Entleeren des Behälters und zurück und mit einer Halteeinrichtung zum Halten des Behälters an der Schwenkeinrichtung während des Schwenkens der Schwenkeinrichtung von der Aufnahmeausrichtung in die Entleerungsausrichtung. Ferner betrifft die Erfindung ein Verfahren zum Betrieb eines solchen Vereinzelungsentladers.

Es sind bereits verschiedene Einrichtungen zum Vereinzeln von Packstücken, also umverpackten Gütern, insbesondere Stückgütern, bekannt, bei denen die Packstücke zunächst in einem Behälter vorliegen. Aus diesem Behälter müssen die Packstücke zum Zwecke des Vereinzelns zunächst entladen werden. Das Entladen geschieht dabei entweder durch händisches Leeren des Behälters auf einen Förderer oder dergleichen oder durch das Auskippen des Behälters auf ein Förderband oder dergleichen. Das Kippen des Behälters führt dabei in einigen Fällen nicht nur zum Drehen des Behälters, sondern auch zum Anheben des Behälters, um die Packstücke auf eine Aufnahme in geeigneter Höhe schütten zu können. Mit anderen Worten wird der Behälter bedarfsweise nicht nur gedreht, sondern geschwenkt, um die Packstücke auszukippen. Hierzu dient eine entsprechende Schwenkeinrichtung, die von einer vorwiegend vertikalen Aufnahmeausrichtung zum Aufnehmen des Behälters in eine vorwiegend horizontale Entleerungsausrichtung zum Entleeren des Behälters und zurück verstellt werden kann. Die Behälter werden nämlich regelmäßig aufrecht und mit Packstücken bereitgestellt, so dass die Schwenkeinrichtung die Behälter in einer vorwiegend vertikalen Ausrichtung aufnehmen kann. Zum Entleeren der Behälter muss der Behälter in eine vorwiegend horizontale Ausrichtung gebracht werden, weil ansonsten die Packstücke ohne weitere Eingriffe wenigstens tendenziell in dem Behälter verbleiben würden. Damit der Behälter während des Schwenkens sicher an der Schwenkeinrichtung gehalten wird, so dass Betriebsstörungen vermieden werden können, weist der Vereinzelungsentlader eine Halteeinrichtung zum Halten des Behälters an der Schwenkeinrichtung auf. Der Behälter wird dabei insbesondere während des Schwenkens der Schwenkeinrichtung von der Aufnahmeausrichtung in die Entleerungsausrichtung an der Schwenkeinrichtung gehalten. Durch die sich der Schwenkeinrichtung anschließende Fördertechnik, insbesondere umfassend eine Reihe von Förderbändern, können die Packstücke zum Bestimmungsort transportiert und dabei vereinzelt werden.

Die entsprechende Fördertechnik ist wie die Technik zum Auskippen der Behälter seit geraumer Zeit bekannt. Das Leeren der die Packstücke beinhaltenden Behälter und das anschließende Abtransportieren der Packstücke mit integrierter Vereinzelung der Packstücke funktioniert in der Praxis sehr zuverlässig und kann mit einem vertretbaren apparativen und konstruktiven Aufwand realisiert werden. Die bekannten Lösungen benötigen jedoch grundsätzlich recht viel Platz für das eigentliche Handling, also das Entladen und das Vereinzeln, der Packstücke.

DE 10 2009 033 455 A1 offenbart einen Vereinzelungsentlader nach dem Oberbegriff des Anspruchs 1.

Daher liegt der vorliegenden Erfindung die Aufgabe zugrunde, den Vereinzelungsentlader und das Verfahren jeweils der eingangs genannten und zuvor näher beschriebenen Art derart auszugestalten und weiterzubilden, dass das Entladen mit Packstücken gefüllter Behälter und das Vereinzeln der entsprechenden Packstücke kompakter, d.h. mit einem höheren Durchsatz bezogen auf die benötigte Fläche, erfolgen kann.

Diese Aufgabe ist durch einen Vereinzelungsentlader nach Anspruch 1 gelöst.

Die genannte Aufgabe ist ferner gemäß Anspruch 10 gelöst durch ein Verfahren zum Betrieb eines Vereinzelungsentladers nach einem der Ansprüche 1 bis 9,
- bei dem der Behälter über die Halteeinrichtung an der Schwenkeinrichtung gehalten wird,
- bei dem der Behälter mit der Schwenkeinrichtung von der Aufnahmeausrichtung in die Entleerungsausrichtung geschwenkt wird und
- bei dem die Packstücke des Behälters wenigstens teilweise von der Riemenfördervorrichtung aus dem Behälter transportiert werden.

Die Erfindung hat erkannt, dass die fördertechnischen Funktionen des Entladens der Packstücke aus dem Behälter und das Vereinzeln der entladenen Packstücke anstelle einer sequenziellen Bearbeitung integriert werden können. Dies bedeutet, dass das Entladen und das Vereinzeln wenigstens in Teilen, also beispielsweise ein Vorvereinzeln räumlich zusammengeführt werden können. Dies wird erreicht, indem die Riemenfördervorrichtung und die Schwenkeinrichtung zusammengeführt werden, so dass die Riemenfördervorrichtung zusammen mit der Schwenkeinrichtung geschwenkt wird. Während die Schwenkeinrichtung von der vorwiegend vertikalen Aufnahmeausrichtung in die vorwiegend horizontale Entleerungsausrichtung geschwenkt wird, wird parallel bzw. zeitgleich die Riemenfördervorrichtung von einer vorwiegend vertikalen Ausgangsstellung in eine vorwiegend horizontale Entladestellung verstellt. Auf diese Weise wird ein Entleeren der Packstücke auf die Riemenfördervorrichtung erreicht, die mit dem Entladen zugleich zum Vereinzeln genutzt werden kann. Nach dem Entleeren des Behälters lässt sich die Schwenkeinrichtung wieder zusammen mit der Riemenfördervorrichtung in die Ausgangsstellung bzw. Aufnahmeausrichtung zurückverstellen.

Die Integration des Entleerens des Behälters und des Vereinzelns der Packstücke kann dadurch begünstigt werden, dass der Behälter nicht nur eine obere Öffnung aufweist, aus der die Packstücke aus dem Behälter gelangen können. Wenn der Behälter alternativ oder zusätzlich zu einer solchen oberen Öffnung eine seitliche Öffnung aufweist, aus der die Packstücke aus dem Behälter gelangen können, muss der Behälter nicht bis nahezu auf den Kopf gedreht werden. Ein Schwenken in eine überwiegend horizontale Ausrichtung würde dann genügen können. Die Bezeichnung obere und seitliche Öffnung bezieht sich auf den Behälter in seiner ursprünglichen Ausrichtung, also etwa bevor der Behälter über die Halteeinrichtung mit der Schwenkeinrichtung verbunden und mithin bevor der Behälter durch die Schwenkeinrichtung geschwenkt worden ist. Die seitliche Öffnung kann bedarfsweise durch eine Klappe oder wenigstens einen Gurt wenigstens teilweise verschlossen werden. Dies ist beispielsweise bei sogenannten Rollbehältern der Fall.

Die Packstücke können so bedarfsweise noch in dem Behälter, beispielsweise infolge einer entsprechenden Setzbewegung der Packstücke, mit dem Riemenförderer in Kontakt kommen, um von der Riemenfördervorrichtung aus dem Behälter transportiert zu werden, was zugleich den Beginn des Vereinzelns der Packstücke darstellen kann.

Damit der Behälter nicht versehentlich von der Schwenkeinrichtung herunterfällt und/oder damit der Behälter auch zusammen mit der Schwenkeinrichtung geschwenkt wird, ist eine Halteeinrichtung vorgesehen, die jedoch sehr unterschiedlich ausgebildet sein kann, solange die Halteeinrichtung die vorstehende Funktion übernehmen kann. Infolge der überwiegend vertikalen Ausrichtung der Schwenkeinrichtung in der Aufnahmeausrichtung und der gleichzeitig vorwiegend vertikalen Ausrichtung der Riemenfördervorrichtung in der Ausgangsstellung können der Behälter und die Riemenfördervorrichtung vor dem Schwenken wenigstens abschnittsweise in horizontaler Richtung in Überdeckung gelangen. Dies ist insbesondere auf der Höhe einer seitlichen Öffnung des Behälters zweckmäßig, aus der Packstücke aus dem Behälter gelangen können, wenn sich die Schwenkeinrichtung und die Riemenfördervorrichtung in einer wenigstens vorwiegend horizontalen Ausrichtung befinden. Selbst wenn die Packstücke in der entsprechenden Ausrichtung nicht aus der seitlichen Öffnung des Behälters gelangen können, ist die entsprechende horizontale Überdeckung von Öffnung und Riemenfördervorrichtung zweckmäßig, etwa wenn es dann, beispielweise durch eine Setzbewegung beim Schwenken, zu einem Kontakt der Packstücke über die Öffnung mit der Riemenfördervorrichtung kommt, die das Entleeren des Behälters wenigstens unterstützt und/oder das Vereinzeln wenigstens teilweise bewirkt.

In diesem Zusammenhang wird darauf hingewiesen, dass das Verfahren erfindungsgemäß zunächst lediglich darauf beschränkt ist, dass die Packstücke des Behälters wenigstens teilweise von der Riemenfördervorrichtung aus dem Behälter transportiert werden. Mithin ist die Riemenfördervorrichtung so vorgesehen, dass die Riemenfördervorrichtung das Entleeren des Behälters begünstigt. Die Packstücke gelangen also wenigstens in Teilen beim Entleeren aus dem Behälter direkt auf die Riemenfördervorrichtung bzw. in Kontakt mit der Riemenfördervorrichtung.

Unter einer Riemenfördervorrichtung wird vorzugsweise ein Bandförderer verstanden, bei dem als Zugmittel zum Fördern der Packstücke wenigstens ein Riemen endlos umläuft. Der Riemen kann auch als Gurt, also breiter als ein Riemen ausgebildet sein, wobei man dann meist von einem Gurtförderer spricht. Es kommen aber auch andere Zugmittel in Frage, wie diese bei sogenannten Kettenförderern zum Einsatz kommen. Da jedoch die Verwendung von Riemen bevorzugt ist, wird vorliegend weiter der Begriff Riemenfördervorrichtung verwendet. Es können auch Riemenförderer mit mehreren nebeneinander angeordneten, endlos umlaufenden Riemen oder Gurten vorgesehen sein. Alternativ können auch mehrere Riemenförderer mit wenigstens einem Riemen oder Gurt nebeneinander vorgesehen sein, um eine Mehrzahl von Riemen und/oder Gurten zu bilden. Der Fachmann wird grundsätzlich keine Mühe haben, eine geeignete Ausgestaltung der Riemenfördervorrichtung bereitzustellen, weshalb der Einfachheit halber und zur Vermeidung unnötiger Wiederholungen im Folgenden von Riemenfördervorrichtung, Riemenfördereinheit und Riemenförderer gesprochen wird, ohne dass damit ausschließlich Riemenförderer nach klassischem technischen Verständnis zu verstehen sein sollen, wenngleich diese bevorzugt werden. Es kann sich dabei ganz grundsätzlich auch ganz allgemein um Einrichtungen handeln, die für gewöhnlich der Gruppe der Bandförderer und/oder der Kettenförderer zugeordnet werden.

Bei den Packstücken kann es sich um umverpackte Güter und/oder Stückgüter handeln. Hinsichtlich der Größe, der Form und der Art bestehen grundsätzlich keine Einschränkungen. Allerdings wird es meist bevorzugt sein, wenn die Packstücke von einer Person getragen und gehandhabt werden können. Insbesondere ist es erfindungsgemäß von besonderem Vorteil, wenn die Packstücke sogenannte Paketsendungen bzw. Pakete sind, die separat verwendet und in Verteilzentren sortiert und verteilt werden.

Der besseren Verständlichkeit halber und zur Vermeidung unnötiger Wiederholungen werden nachfolgend der Vereinzelungsentlader und das Verfahren zu dessen Betrieb gemeinsam beschrieben, ohne jeweils im Einzelnen zwischen dem Vereinzelungsentlader und dem Verfahren zu unterscheiden. Für den Fachmann ergibt sich jedoch anhand des jeweiligen Kontextes, welche Merkmale jeweils hinsichtlich des Vereinzelungsentladers und des Verfahrens besonders bevorzugt sind.

Bei einer ersten besonders bevorzugten Ausgestaltung des Vereinzelungsentladers umfasst die Riemenfördervorrichtung mehrere, vorzugsweise wenigstens drei, weiter vorzugsweise wenigstens fünf, insbesondere wenigstens sieben, nebeneinander angeordnete Riemenförderer. Die Mehrzahl der Riemenförderer erlaubt es, für jeden Riemenförderer oder wenigstens bestimmte Riemenförderer unterschiedliche Transportgeschwindigkeiten einzustellen, um dadurch das Vereinzeln der Packstücke zu begünstigen und/oder zu beschleunigen. Die Transportgeschwindigkeit eines Riemenförderers wird dabei vorzugsweise als die Riemengeschwindigkeit in der Transportrichtung des Riemenförderers angesehen. Mithin kann die Transportgeschwindigkeit des Riemens gleich der Geschwindigkeit sein, mit der ein Packstück entlang des Riemens des Riemenförderers gefördert wird. Zwingend ist dies jedoch nicht. Das Packstück kann insbesondere gegenüber dem entsprechenden Riemen abgebremst werden, so dass die Geschwindigkeiten des Packstücks von der Transportgeschwindigkeit des Riemens abweicht. Unabhängig davon ist es für eine Vereinzelung parallel zu einem gezielten Transport der Packstücke weiter bevorzugt, wenn die Riemenförderer wenigstens im Wesentlichen parallele Transportrichtungen definieren. Dann können die Packstücke in eine gemeinsame Richtung gefördert und dabei zudem wenigstens teilweise vereinzelt werden.

Wenn die Transportgeschwindigkeit der inneren Riemenförderer der Riemenfördervorrichtung langsamer als die Transportgeschwindigkeit der äußeren Riemenförderer der Riemenfördervorrichtung ist, werden die Packstücke entlang der Riemenfördervorrichtung entzerrt, was zur Vereinzelung der Packstücke beiträgt. Dieser Effekt wird in besonders effektiver Weise erreicht, wenn die Transportgeschwindigkeiten der Riemenförderer von innen nach außen quer zur Transportrichtung der Riemenfördervorrichtung jeweils schrittweise zunehmen. Mit anderen Worten ergibt sich quer zur Transportrichtung des Riemenförderers ein wenigstens im Wesentlichen U-förmiges oder V-förmiges Geschwindigkeitsprofil der Riemenfördervorrichtung.

Wenn die Riemenförderer der Riemenfördervorrichtung unmittelbar angrenzend zueinander vorgesehen sind, kann die Riemenfördervorrichtung effizient einerseits zum Transport der Packstücke und andererseits zum Vereinzeln der Packstücke genutzt werden, was die Kompaktheit und damit den Durchsatz des Vereinzelungsentladers erhöht. Alternativ oder zusätzlich können die Riemenförderer der Riemenfördervorrichtung wenigstens im Wesentlichen gleich lang ausgebildet sein. Auch dies dient dazu, dass die Riemenfördervorrichtung möglichst effektiv genutzt werden kann. Außerdem ergibt sich dann bedarfsweise ein gleichmäßiger Übergang von der Riemenfördervorrichtung an eine sich anschließende Fördereinrichtung zum weiteren Transport der Packstücke.

Für eine parallele Anordnung der Riemenförderer und einen gleichmäßigen Transport der Packstücke kann es alternativ oder zusätzlich auch zweckmäßig sein, wenn die in Transportrichtung hinteren Enden der Riemenförderer der Riemenfördervorrichtung wenigstens im Wesentlichen auf einer Ebene liegen und/oder wenn die in Transportrichtung vorderen Enden der Riemenförderer der Riemenfördervorrichtung wenigstens im Wesentlichen auf einer Ebene liegen. Die genannten Ebenen sind dabei vorzugsweise als senkrecht zu der Transportrichtung der Riemenfördervorrichtung zu verstehen. Beispielsweise wird so ein über die Breite gleichmäßiges Ende der Riemenfördervorrichtung, sei es am Anfang und/oder am Ende der Riemenfördervorrichtung in der Transportrichtung gesehen, erreicht, was einer kompakteren und effizienteren Integration des Vereinzelungsentladers in eine umfassendere Förderanlage dienlich sein kann.

Erfindungsgemäß bildet die Riemenfördervorrichtung eine konvex gewölbte Transportfläche der Riemenfördervorrichtung zum Transport der Packstücke, um die auf die Packstücke wirkenden Gewichtskräfte für den Transport und/oder die Vereinzelung der Packstücke ausnutzen zu können. Die Packstücke werden dann nicht nur in der Transportrichtung bewegt, sondern rutschen auch mehr oder weniger bzw. teilweise seitlich von der Riemenfördervorrichtung herunter. Es können also gleichzeitig Bewegungen der Packstücke in zwei zueinander senkrechten Richtungen für die Vereinzelung der Packstücke genutzt werden. Dies ist in besonderem Maße der Fall, da die Transportfläche erfindungsgemäß in wenigstens einem

Querschnitt senkrecht zur Transportrichtung der Riemenfördervorrichtung wenigstens im Wesentlichen U-förmig gebogen ist. Unter einer U-förmig gebogenen Riemenfördervorrichtung kann beispielsweise eine teilkreisförmig gebogene oder eine gemäß eines Teils eines Ovals gebogene Riemenfördervorrichtung verstanden werden. Die freien Schenkel des U müssen dabei folglich weder nach oben weisen noch parallel zueinander sein, um eine U-förmige Gestalt der Transportfläche der Riemenfördervorrichtung zu erhalten. Es reicht beispielsweise aus, wenn die Riemenfördervorrichtung nach oben gewölbt oder gebogen bzw. konkav ausgebildet ist. Durch die Begrifflichkeit U-förmig soll dabei zum Ausdruck kommen, dass eine Form mit beliebigen Wellentälern und Wellenbergen entlang des Querschnitts bzw. der Breite der Riemenfördervorrichtung weniger bevorzugt ist. Weiter bevorzugt ist es aus den genannten Gründen zudem, wenn sehr viele Querschnitte der Transportfläche senkrecht zur Transportrichtung der Riemenfördervorrichtung wenigstens im Wesentlichen U-förmig gebogen sind oder wenn die Transportfläche wenigstens im Wesentlichen über die gesamte Längserstreckung der Transportfläche quer zur Transportrichtung einen wenigstens im Wesentlichen U-förmigen Querschnitt aufweist. Auch hier ist der Begriff U-förmig wiederum bevorzugt in der zuvor dargelegten Weise zu verstehen.

Neben der Riemenfördervorrichtung kann bedarfsweise noch eine Riemenfördereinheit vorgesehen sein, die sich der Riemenfördervorrichtung anschließen kann, um dem weiteren Transport von wenigstens einigen Packstücken zu dienen. Dabei ist insbesondere vorgesehen, dass die Riemenfördereinheit und die Riemenfördervorrichtung in der Entladestellung wenigstens im Wesentlichen parallele Transportrichtungen aufweisen. So kann ein platzsparender, kontinuierlicher Transport der Packstücke wenigstens im Wesentlichen in eine Richtung erfolgen, die von einer Vereinzelung überlagert wird. Besonders effektiv und zugleich besonders effizient ist es dabei, die Riemenfördereinheit und die Riemenfördervorrichtung wenigstens im Wesentlichen hintereinander angrenzend zueinander auszurichten. So wird beispielsweise kein Bauraum verschenkt und es kann bedarfsweise eine fluchtende Anordnung von Riemenfördervorrichtung und Riemenfördereinheit gewählt werden, die eine stetige Bewegung der Packstücke sicherstellt und die Packstücke zugleich schont. Unerwünschte Beschädigungen an den Packstücken können so vermieden werden.

Vorliegend wird aus denselben Gründen der Begriff Riemenfördereinheit und nicht etwa allgemein Bandfördereinheit oder Kettenfördereinheit verwendet wie dies bereits zuvor im Zusammenhang mit der Riemenfördervorrichtung beschrieben worden ist. Die Verwendung von Riemenförderern ist hier nämlich bevorzugt, obwohl die Riemenfördereinheit auch wenigstens einen Gurtförderer oder einen Kettenförderer umfassen könnte. Gurt und Riemen unterscheiden sich dabei prinzipiell darin, dass Riemen typischerweise schmaler sind als Gurte. Riemen und Gurte laufen aber als Zugmittel endlos um. Kettenförderer sind aufwendiger, schwerer und wartungsintensiver, weshalb diese weniger bevorzugt, gleichwohl aber auch nicht ausgeschlossen sind. Da Riemenförderer tatsächlich bevorzugt sind, wird der Begriff Riemenfördereinheit verwendet und darauf verzichtet, stets im Einzelnen auf die möglichen unterschiedlichen Ausgestaltungen hinzuweisen, um unnötige Wiederholungen zu vermeiden. Der Begriff Riemenfördereinheit und Riemenfördervorrichtung wird dabei jedoch grundsätzlich nicht beschränkend in Bezug auf Riemenförderer verwendet. Die jeweiligen Ausgestaltungsoptionen sind für den Fachmann der Beschreibung anhand des jeweiligen Kontextes ersichtlich.

Auch die Riemenfördereinheit umfasst vorzugsweise mehrere, vorzugsweise wenigstens drei, weiter vorzugsweise wenigstens fünf, insbesondere wenigstens sieben, nebeneinander angeordnete Riemenförderer. Die Mehrzahl der Riemenförderer erlaubt es für jeden Riemenförderer oder wenigstens bestimmte Riemenförderer unterschiedliche Transportgeschwindigkeiten einzustellen, um dadurch das Vereinzeln der Packstücke zu begünstigen und/oder zu beschleunigen. Die Transportgeschwindigkeit eines Riemenförderers wird dabei vorzugsweise als die Riemengeschwindigkeit in der Transportrichtung des Riemenförderers angesehen. Mithin kann die Transportgeschwindigkeit des Riemens gleich der Geschwindigkeit sein, mit der ein Packstück entlang des Riemens des Riemenförderers gefördert wird. Zwingend ist dies jedoch nicht. Das Packstück kann insbesondere gegenüber dem entsprechenden Riemen abgebremst werden, so dass die Geschwindigkeiten des Packstücks von der Transportgeschwindigkeit des Riemens abweicht. Unabhängig davon ist es für eine Vereinzelung parallel zu einem gezielten Transport der Packstücke weiter bevorzugt, wenn die Riemenförderer wenigstens im Wesentlichen parallele Transportrichtungen definieren. Dann können die Packstücke in eine gemeinsame Richtung gefördert und dabei zudem wenigstens teilweise vereinzelt werden.

Wenn die Transportgeschwindigkeit der inneren Riemenförderer der Riemenfördereinheit langsamer als die Transportgeschwindigkeit der äußeren Riemenförderer der Riemenfördereinheit ist, werden die Packstücke entlang der Riemenfördereinheit entzerrt, was zur Vereinzelung der Packstücke beiträgt. Dieser Effekt wird in besonders effektiver Weise erreicht, wenn die Transportgeschwindigkeiten der Riemenförderer von innen nach außen quer zur Transportrichtung der Riemenfördereinheit jeweils schrittweise zunehmen. Mit anderen Worten ergibt sich quer zur Transportrichtung des Riemenförderers ein wenigstens im Wesentlichen U-förmiges oder V-förmiges Geschwindigkeitsprofil der Riemenfördereinheit.

Wenn die Riemenförderer der Riemenfördereinheit unmittelbar angrenzend zueinander vorgesehen sind, kann die Riemenfördereinheit effizient einerseits zum Transport der Packstücke und andererseits zum Vereinzeln der Packstücke genutzt werden, was die Kompaktheit und damit den Durchsatz des Vereinzelungsentladers erhöht. Alternativ oder zusätzlich können die Riemenförderer der Riemenfördereinheit wenigstens im Wesentlichen gleich lang ausgebildet sein. Auch dies dient dazu, dass die Riemenfördereinheit möglichst effektiv genutzt werden kann. Außerdem ergibt sich dann bedarfsweise ein gleichmäßiger Übergang an die Riemenfördereinheit und/oder von der Riemenfördereinheit an eine sich anschließende Fördereinrichtung zum weiteren Transport der Packstücke.

Für eine parallele Anordnung der Riemenförderer und einen gleichmäßigen Transport der Packstücke kann es alternativ oder zusätzlich auch zweckmäßig sein, wenn die in Transportrichtung hinteren Enden der Riemenförderer der Riemenfördereinheit wenigstens im Wesentlichen auf einer Ebene liegen und/oder wenn die in Transportrichtung vorderen Enden der Riemenförderer der Riemenfördereinheit wenigstens im Wesentlichen auf einer Ebene liegen. Die genannten Ebenen sind dabei vorzugsweise wenigstens im Wesentlichen vertikal und/oder wenigstens im Wesentlichen senkrecht zur Transportrichtung der Riemenfördereinheit ausgerichtet. Beispielsweise wird so ein über die Breite gleichmäßiges Ende der Riemenfördereinheit, sei es am Anfang und/oder am Ende der Riemenfördereinheit in der Transportrichtung gesehen, erreicht, was einer kompakteren und effizienteren Integration des Vereinzelungsentladers in eine umfassendere Förderanlage dienlich sein kann.

Um auch die auf die Packstücke wirkenden Gewichtskräfte für den Transport und/oder die Vereinzelung der Packstücke ausnutzen zu können, bietet es sich an, wenn der die Riemenfördereinheit eine konvex gewölbte Transportfläche der Riemenfördereinheit zum Transport der Packstücke bildet. Die Packstücke werden dann nicht nur in der Transportrichtung bewegt, sondern rutschen auch mehr oder weniger bzw. teilweise seitlich von der Riemenfördereinheit herunter. Es können also gleichzeitig Bewegungen der Packstücke in zwei zueinander senkrechten Richtungen für die Vereinzelung der Packstücke genutzt werden. Dies ist in besonderem Maße der Fall, wenn die Transportfläche in wenigstens einem Querschnitt senkrecht zur Transportrichtung der Riemenfördereinheit wenigstens im Wesentlichen U-förmig konvex nach oben gebogen ist. Dabei müssen jedoch die freien Schenkel des U weder nach oben weisen noch parallel zueinander sein, um eine U-förmige Gestalt der Transportfläche der Riemenfördereinheit zu erhalten. Weiter bevorzugt ist es aus den genannten Gründen zudem, wenn sehr viele Querschnitte der Transportfläche senkrecht zur Transportrichtung der Riemenfördereinheit wenigstens im Wesentlichen U-förmig gebogen sind oder wenn die Transportfläche wenigstens im Wesentlichen über die gesamte Längserstreckung der Transportfläche quer zur Transportrichtung einen wenigstens im Wesentlichen U-förmigen Querschnitt aufweist. Der Begriff U-förmig ist dabei wie bereits zuvor beschrieben vorzugsweise breit zu verstehen.

Zu wenigstens einer der Seiten der Riemenfördervorrichtung kann sich in der Entladestellung der Riemenfördervorrichtung wenigstens ein Seitenriemenförderer anschließen. So können Packstücke von dem Seitenriemenförderer aufgenommen und abgeführt werden, die seitlich von dem Riemenförderer heruntergelangen. Dafür kann es mehrere Gründe geben. Beim Entladen der Packstücke aus dem Behälter liegen viele dieser Packstücke zunächst übereinander und fallen dann teilweise zur Seite. Wenn die Transportfläche zur Seite geneigt ist, können zudem Packstücke seitlich von der Riemenförderervorrichtung rutschen. Um die entsprechende Vereinzelung der Packstücke zu begünstigen, ist es mithin besonders zweckmäßig, wenn zu beiden Seiten der Riemenfördervorrichtung in der Entladestellung jeweils wenigstens ein Seitenriemenförderer vorgesehen ist. So können zu beiden Seiten von dem Riemenförderer gelangende Packstücke auf die Seitenriemenförderer gelangen und mit den Seitenriemenförderern abtransportiert werden. Aus denselben Gründen kann sich zu wenigstens einer Seite der Riemenfördereinheit wenigstens ein Seitenriemenförderer anschließen, wobei es sich bedarfsweise um denselben wenigstens einen Seitenriemenförderer handeln kann, der seitlich der Riemenfördervorrichtung vorgesehen ist. Auch hier ist es jedoch weiter bevorzugt, wenn zu den beiden Seiten der Riemenfördereinheit jeweils wenigstens ein Seitenriemenförderer vorgesehen ist. Die wenigstens eine Seitenriemenfördervorrichtung wird vorliegend der Einfachheit und Zuverlässigkeit halber insbesondere wenigstens einen Bandförderer und/oder Kettenförderer umfassen. Der Bandförderer wird dabei der Transportfläche des Zugmittels halber, welche die Packstücke transportiert, vorzugsweise als Gurtförderer ausgebildet sein. Die Seitenriemenfördervorrichtung kann auch wenigstens einen anderen Bandförderer, insbesondere Riemenförderer, oder einen Kettenförderer umfassen. Der Fachmann wird dabei in der Lage sein, für bestimmte Anwendungen eine geeignete Seitenriemenfördervorrichtung bereitzustellen.

Wenn wenigstens zu einer Seite der Riemenfördervorrichtung und/oder der Riemenfördereinheit mehrere mit unterschiedlichen Transportgeschwindigkeiten betriebene Seitenriemenförderer hintereinander angeordnet sind, können die unterschiedlichen Transportgeschwindigkeiten in der Transportrichtung zu einer schrittweisen Vereinzelung der Packstücke genutzt werden. Dies ist besonders effektiv und für die Packstücke schonend möglich, wenn die entsprechenden Seitenriemenförderer fluchtend hintereinander angeordnet sind.

Der Einfachheit halber kann die Halteeinrichtung eine Aufnahme darstellen oder umfassen. Der Behälter kann dann einfach in die Aufnahme verbracht werden, um anschließend mit der Schwenkeinrichtung und der Riemenfördervorrichtung geschwenkt zu werden. Durch die Form der Aufnahme kann auch in einfacher Weise verhindert werden, dass der Behälter seitlich von der Schwenkeinrichtung rutscht. Damit der Behälter leicht geschwenkt, mithin entsprechend angehoben werden kann, bietet sich eine Aufstandsfläche für den Behälter an, auf die der Behälter vor dem Schwenken gestellt wird. Wenn die Aufstandsfläche zusammen mit der Schwenkeinrichtung geschwenkt wird, lässt sich so ein gleichzeitiges Schwenken des Behälters in einfacher Weise erreichen.

Dabei ist es grundsätzlich der Einfachheit halber besonders bevorzugt, wenn die Aufnahme und/oder die Aufstandsfläche zusammen mit der Riemenfördervorrichtung von der Ausgangsstellung in die Entladestellung verstellbar ist. Dann können die Riemenfördervorrichtung und der Behälter geschwenkt werden aber relativ zueinander wenigstens im Wesentlichen ihre Lage beibehalten. Dabei hat es sich für das Entladen als zweckmäßig erwiesen, wenn die Aufstandsfläche und die Riemenfördervorrichtung in einem Winkel von 60° bis 90°, vorzugsweise 70° bis 90°, insbesondere 80° bis 90°, zueinander stehende Ebenen definieren. Die Aufstandsfläche und die Riemenfördervorrichtung stehen mithin wenigstens im Wesentlichen senkrecht zueinander. Dann kann der Behälter während des Schwenkens günstig durch die Riemenfördervorrichtung gestützt werden.

Der Vereinzelungsentlader kann grundsätzlich mit sehr unterschiedlichen Behältern verwendet werden. Dabei ist es besonders einfach, wenn die Behälter Rollen aufweisen, mit denen die Behälter gegen die Schwenkeinrichtung, insbesondere in die Aufnahme und/oder auf die Aufstandsfläche der Schwenkeinrichtung, geschoben werden können. Entsprechende Behälter können beispielsweise sogenannte Rollbehälter, Rollcontainer oder Flexicarts sein. Grundsätzlich ist es aber auch denkbar, Behälter ohne Rollen zu verwenden, also beispielsweise Palettenbehälter, Palettencontainer oder Paketsäcke. Die Behälter sollten vorzugsweise lediglich auf irgendeine Weise ausgekippt bzw. die Packstücke in den Behälter irgendwie ausgeschüttet werden können.

Bei einer ersten besonders bevorzugten Ausgestaltung des Verfahrens wird der Behälter mit einer der Riemenfördervorrichtung zugewandten seitlichen Öffnung an der Schwenkeinrichtung gehalten. So kann erreicht werden, dass die Packstücke infolge des Schwenkens aus der Öffnung des Behälters direkt in Kontakt mit der Riemenfördervorrichtung gelangen, die das Entleeren des Behälters unterstützen kann und/oder das Vereinzeln der Packstücke unterstützen kann. Dies ist besonders effektiv möglich, wenn die Packstücke mit der Riemenfördervorrichtung in der Entladestellung über die seitliche Öffnung des Behälters in Kontakt mit der Riemenfördervorrichtung gelangen. Mithin müssen die Packstücke nicht erst gänzlich ausgeschüttet werden, sondern die Packstücke gelangen wenigstens in Teilen schon während des Ausschüttens in Kontakt mit der Riemenfördervorrichtung.

Beim Schwenken kann der wenigstens eine Riemenförderer der Riemenfördervorrichtung stillstehen, da der Riemenförderer hier wenn überhaupt nur eine beschränkte Funktion erfüllen kann. Jedenfalls wäre es aber zweckmäßig, den wenigstens einen Riemenförderer der Riemenfördervorrichtung in die Transportrichtung der Riemenfördervorrichtung zu bewegen. Wenn der wenigstens eine Riemenförderer der Riemenfördervorrichtung mit der Riemenfördervorrichtung in der Entladestellung in Transportrichtung bewegt wird, können das Entleeren und Vereinzeln infolge des Ausleerens des Behälters durch den wenigstens einen Riemenförderer der Riemenfördervorrichtung unterstützt werden. Alternativ oder zusätzlich können im Falle von nebeneinander vorgesehenen mehreren Riemenförderern der Riemenfördervorrichtung die Riemenförderer jeweils von innen nach außen schrittweise mit einer höheren Transportgeschwindigkeit bewegt werden. Auf diese Weise wird das Entladen der Packstücke begünstigt und eine Vereinzelung der Packstücke wenigstens teilweise bewirkt.

Ganz grundsätzlich kann es unabhängig von der Anzahl der Riemenförderer der Riemenfördervorrichtung zweckmäßig sein, wenn die Packstücke wenigstens teilweise entlang der konvexen Transportfläche der Riemenfördervorrichtung zur Seite nach unten auf wenigstens einen Seitenriemenförderer rutschen, der sich seitlich der Riemenfördervorrichtung befindet. Auch dies dient dem Vereinzeln der Packstücke. Dies ist umso mehr der Fall, wenn die Packstücke zu beiden Seiten von der Riemenfördervorrichtung auf zu beiden Seiten der Riemenfördervorrichtung vorgesehenen Seitenriemenförderern rutschen. Wenn die Packstücke zudem wenigstens teilweise entlang von mehreren, vorzugsweise fluchtend, hintereinander angeordneten Seitenriemenförderern vereinzelt werden, wird das Vereinzeln sehr effizient möglich. Dies ist insbesondere der Fall, wenn zu beiden Seiten der Riemenfördervorrichtung die Packstücke über mehrere Seitenriemenförderer hintereinander vereinzelt werden. Die Vereinzelung wird dabei dadurch begünstigt, dass die hintereinander angeordneten Seitenriemenförderer mit unterschiedlichen, insbesondere zunehmenden, Transportgeschwindigkeiten bewegt werden.

Um eine längere Strecke für die Vereinzelung der Packstücke bereitstellen zu können, ohne einen unverhältnismäßigen konstruktiven Aufwand für die Schwenkeinrichtung in Kauf nehmen zu müssen, können die Packstücke wenigstens teilweise von der Riemenfördervorrichtung in der Entladestellung in der Transportrichtung der Riemenfördervorrichtung an eine sich, vorzugsweise fluchtend, an die Riemenfördervorrichtung anschließende Riemenfördereinheit übergeben werden. So können die Riemenfördervorrichtung und die Riemenfördereinheit zum Vereinzeln und Transportieren der Packstücke zusammenwirken. Dabei bietet es sich der Einfachheit halber besonders an, wenn die übergebenen Packstücke wenigstens teilweise von der Riemenfördereinheit in einer Transportrichtung wenigstens im Wesentlichen parallel zur Transportrichtung der Riemenfördervorrichtung transportiert werden. Es müssen also keine Kurven vorgesehen werden und es kommt nicht versehentlich zu einer erneuten lokalen Verdichtung der Packstücke.

Die Riemenfördereinheit kann mehrere Riemenförderer aufweisen, die nebeneinander angeordnet sind. Dann bietet es sich an, die nebeneinander vorgesehenen Riemenförderer der Riemenfördereinheit jeweils von innen nach außen schrittweise mit einer höheren Transportgeschwindigkeit zu bewegen. Dies führt zu einem Geschwindigkeitsprofil quer zur Riemenfördereinheit, das die Vereinzelung der Packstücke begünstigt.

Wenn die Packstücke wenigstens teilweise entlang einer konvexen Transportfläche der Riemenfördereinheit zur Seite und nach unten auf wenigstens einen Seitenriemenförderer rutschen, kann dies die Vereinzelung der Packstücke ebenfalls begünstigen. Alternativ oder zusätzlich können die Packstücke wenigstens teilweise entlang von mehreren, vorzugsweise fluchtend, hintereinander angeordneten Seitenriemenförderern vereinzelt werden. Auch dies begünstigt die Vereinzelung der Packstücke und zwar insbesondere dann, wenn die Transportgeschwindigkeit der hintereinander angeordneten Seitenriemenförderer schrittweise zunimmt. Besonders effektiv ist es in diesem Zusammenhang, wenn die Seitenriemenförderer seitlich der Riemenfördervorrichtung und die Seitenriemenförderer seitlich der Riemenfördereinheit jeweils hintereinander angeordnet sind. Wenn die Seitenriemenförderer dann noch gegenseitig fluchten ist der Transport für die Packstücke sehr schonend.

Das Entleeren des Behälters kann sehr einfach eingeleitet werden, wenn der Behälter zunächst in der Aufnahmeausrichtung der Schwenkeinrichtung in eine Aufnahme und/oder auf eine Aufstandsfläche für den Behälter gefahren oder gestellt wird. Dies erfordert wenige und zudem leicht und zuverlässig zu bewerkstelligende Handgriffe. Bedarfsweise kann die Zuverlässigkeit des Verfahrens erhöht werden, wenn der, bedarfsweise auf der Aufstandsfläche stehende Behälter, während des Schwenkens der Schwenkeinrichtung von der Halteeinrichtung gehalten, insbesondere von der Aufnahme aufgenommen, wird. Eine entsprechende Aufnahme erlaubt dabei das zuverlässige Halten des Behälters während des Schwenkens in recht einfacher Weise.

Nachfolgend wird die Erfindung anhand einer lediglich ein Ausführungsbeispiel darstellenden Zeichnung näher beschrieben. In der Zeichnung zeigt
- Fig. 1A-B: einen erfindungsgemäßen Vereinzelungsentlader mit einer Schwenkeinrichtung in einer Aufnahmeausrichtung und einer Entleerungsausrichtung jeweils in einer schematischen, perspektivischen Ansicht,
- Fig. 2A-C: das schrittweise Entladen eines Behälters und das Vereinzeln der Packstücke mit dem Vereinzelungsentlader aus Fig. 1 mit der Schwenkeinrichtung in der Aufnahmeausrichtung in einer Zwischenausrichtung und der Entleerungsausrichtung jeweils in einer schematischen, perspektivischen Ansicht und
- Fig. 3A-B: einen Behälter zur Verwendung mit dem Vereinzelungsentlader der Fig. 1 jeweils in einer perspektivischen Ansicht.

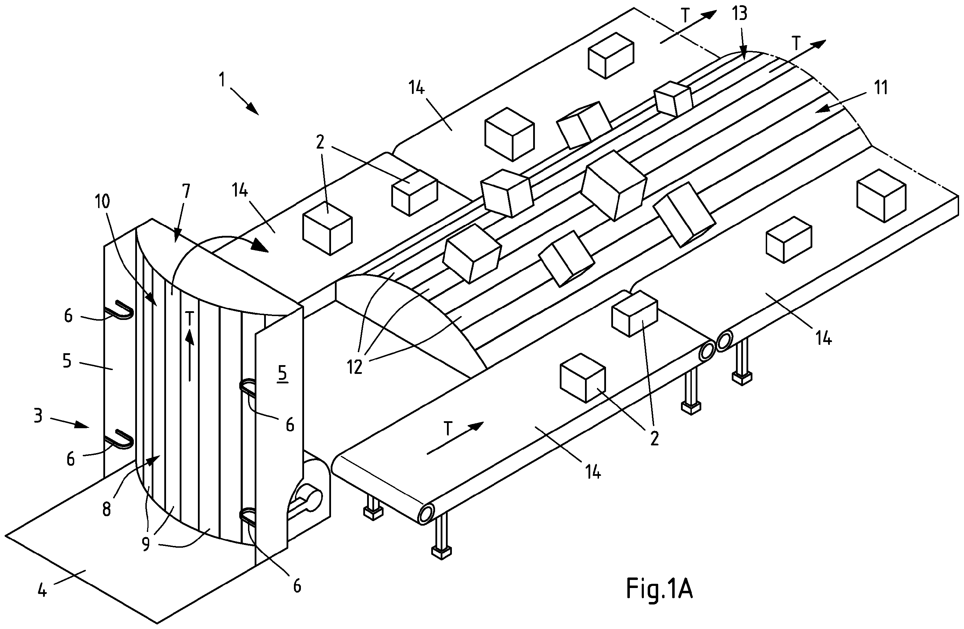

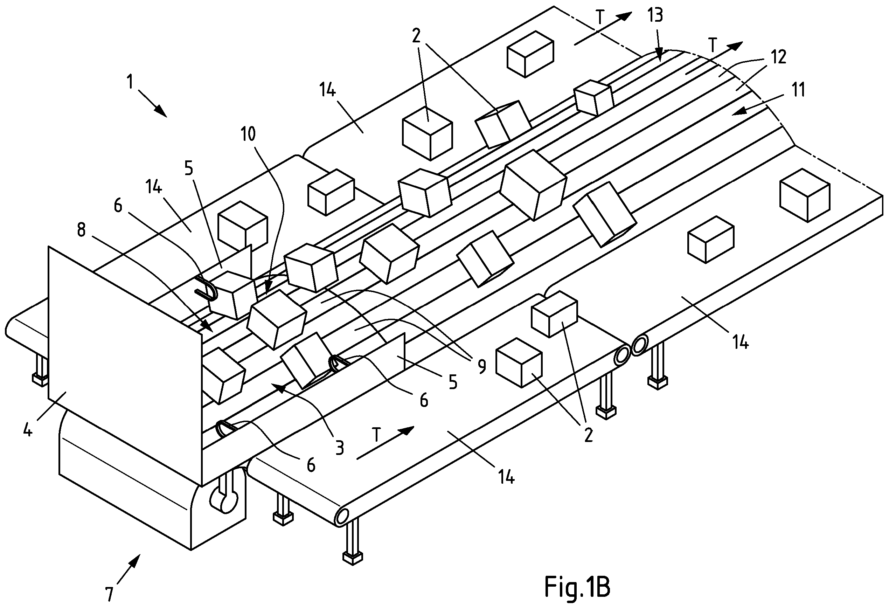

In den Fig. 1A-B ist ein Vereinzelungsentlader 1 zum Entladen eines mit Packstücken 2 beladenen Behälters und zum Vereinzeln der Packstücke 2 des Behälters dargestellt. Der besseren Übersichtlichkeit halber ist in den Fig. 1A-B kein die Packstücke aufweisender Behälter dargestellt. Zur Aufnahme des Behälters weist der Vereinzelungsentlader 1 eine Aufnahme 3 auf, die an ihrem unteren Ende eine Aufstandsfläche 4 aufweist, auf die der Behälter gestellt werden kann. Bei dem dargestellten und insoweit bevorzugten Vereinzelungsentlader 1 ist zudem eine Halteeinrichtung 5 zum sicheren Halten des Behälters während des Entleerens vorgesehen, die neben der Aufnahme 3 und der Aufstandsfläche 4 noch Haltemittel 6 zum Fixieren des Behälters umfasst. Die Halteeinrichtung 5 ist dabei als Teil einer Schwenkeinrichtung 7 ausgebildet, die zum Entladen des Behälters zusammen mit dem Behälter von der in der Fig. 1A dargestellten Aufnahmeausrichtung in die in der Fig. 1B dargestellte Entleerungsausrichtung geschwenkt werden kann.

Die Halteeinrichtung 5 ist bei dem dargestellten und insoweit bevorzugten Vereinzelungsentlader 1 so an der Schwenkeinrichtung 7 vorgesehen, dass der Behälter angrenzend zu einer Riemenfördervorrichtung 8 gehalten wird, die ihrerseits als Teil der Schwenkeinrichtung 7 gemeinsam mit dem Behälter geschwenkt werden kann. In der in der Fig. 1A dargestellten Aufnahmeausrichtung der Schwenkeinrichtung 7 ist nicht nur die Schwenkeinrichtung 7, sondern auch die Riemenfördervorrichtung 8 wenigstens überwiegend oder wenigstens annähernd vertikal ausgerichtet. Bei der Riemenfördervorrichtung 8 entspricht diese Ausrichtung der Ausgangsstellung. In der Fig. 1B sind die Schwenkeinrichtung 7 und die Riemenfördervorrichtung 8 dagegen wenigstens überwiegend oder wenigstens annähernd horizontal ausgerichtet, wobei die dort dargestellte Riemenfördervorrichtung 8 sich in der Entladestellung befindet.

Die dargestellte und insoweit bevorzugte Riemenfördervorrichtung 8 weist neun Riemenförderer 9 auf, die unmittelbar angrenzend zueinander und nebeneinander angeordnet sind. Die dargestellten und insoweit bevorzugten Riemenförderer 9 sind nicht nur parallel zueinander angeordnet, sondern sind auch in parallele Transportrichtungen T antreibbar. Die Riemenförderer 9 sind weiter wenigstens im Wesentlichen gleich lang und erstrecken sich wenigstens im Wesentlichen zwischen einer gemeinsamen Anfangsebene und einer gemeinsamen Endebene der Riemenförderer 9, wobei die Anfangsebene und die Endebene senkrecht zur Transportrichtung T der Riemenfördervorrichtung 8 ausgerichtet sind. Die Mehrzahl der nebeneinander angeordneten Riemenförderer 9 bildet gemeinsam eine Transportfläche 10 der Riemenfördervorrichtung 8, auf der und entlang der die Packstücke 2 transportiert werden können, und zwar wenigstens, wenn sich die Riemenfördervorrichtung 8 in der Entladestellung befindet. Die Transportfläche 10 ist dabei konvex angeordnet und fällt in der Transportrichtung T der Riemenfördervorrichtung 8 gesehen zu den beiden Seiten der Riemenfördervorrichtung 8 ab. Dabei ist die Transportfläche 10 so ausgebildet, dass die Transportfläche 10 in der Entladestellung der Riemenfördervorrichtung 8 wenigstens teilweise in Richtung der Schwerkraft zu beiden Seiten der Riemenfördervorrichtung 8 abfällt, so dass sich eine im Querschnitt und wenigstens im Wesentlichen über die gesamte Länge der Riemenfördervorrichtung 8 U-förmige Transportfläche 10 ergibt. Durch die nach oben gerichtete konvexe Krümmung der Transportfläche 10 ist die durch die Transportfläche 10 gebildete U-Form nach unten offen.

In der Entladestellung der Riemenfördervorrichtung 8 schließt sich der Riemenfördervorrichtung 8 eine Riemenfördereinheit 11 an, die beim dargestellten und insoweit bevorzugten Vereinzelungsentlader 1 sowohl in der Höhe als auch zu den beiden Seiten wenigstens im Wesentlichen fluchtend zueinander ausgerichtet sind. Mit anderen Worten sind die Riemenfördervorrichtung 8 und die Riemenfördereinheit 11 gleich breit und gleich hoch angeordnet. Die Riemenfördereinheit 11 weist zudem wie die Riemenfördervorrichtung 8 mehrere, in diesem Falle neun, Riemenförderer 12 auf. Die Riemenförderer 12 sind parallel und direkt angrenzend zueinander angeordnet, weshalb die Riemenförderer 12 in dieselbe Transportrichtung T bewegt werden können, die beim dargestellten und insoweit bevorzugten Vereinzelungsentlader 1 der Transportrichtung T der Riemenfördervorrichtung 8 entspricht. Hinzu kommt, dass die Riemenförderer 12 der Riemenfördereinheit 11 wie die Riemenförderer 9 der Riemenfördervorrichtung 8 mit unterschiedlichen Transportgeschwindigkeiten angetrieben werden können. Vorzugsweise nimmt die Transportgeschwindigkeit vom mittleren Riemenförderer 12 zu den beiden äußeren Riemenförderern 12 jeweils schrittweise zu. Anders ausgedrückt bewegen sich die Riemenförderer 9,12 von der Mitte aus zu jeder der beiden Seiten gesehen immer schneller, und zwar bei der Riemenfördervorrichtung 8 ebenso wie bei der Riemenfördereinheit 11. Die Riemenfördervorrichtung 8 und die Riemenfördereinheit 11 ähneln sich auch insoweit, als dass die nebeneinander angeordneten Riemenförderer 9,12 eine konvex nach oben gekrümmte Transportfläche 10,13 bilden, die im Querschnitt und zwar vorliegend wenigstens entlang der gesamten Länge eine nach unten geöffnete U-Form aufweist. Dabei sind die U-förmigen Querschnitte der Riemenfördervorrichtung 8 und der Riemenfördereinheit 11 bei dem dargestellten und insoweit bevorzugten Vereinzelungsentlader 1 wenigstens im Wesentlichen fluchtend zueinander ausgerichtet.

Neben der Riemenfördervorrichtung 8 und der Riemenfördereinheit 11 sind zu beiden Seiten noch mehrere hintereinander angeordnete, vorliegend als Bandförderer, insbesondere als Gurtförderer, ausgebildete Seitenriemenförderer 14 vorgesehen, die Packstücke 2 von der Riemenfördervorrichtung 8 und der Riemenfördereinheit 11 aufnehmen und weitertransportieren können. Darüber hinaus können die Seitenriemenförderer 14 mit unterschiedlichen Transportgeschwindigkeiten bewegt werden, und zwar vorzugsweise mit in der Transportrichtung T schrittweise zunehmenden Transportgeschwindigkeiten.

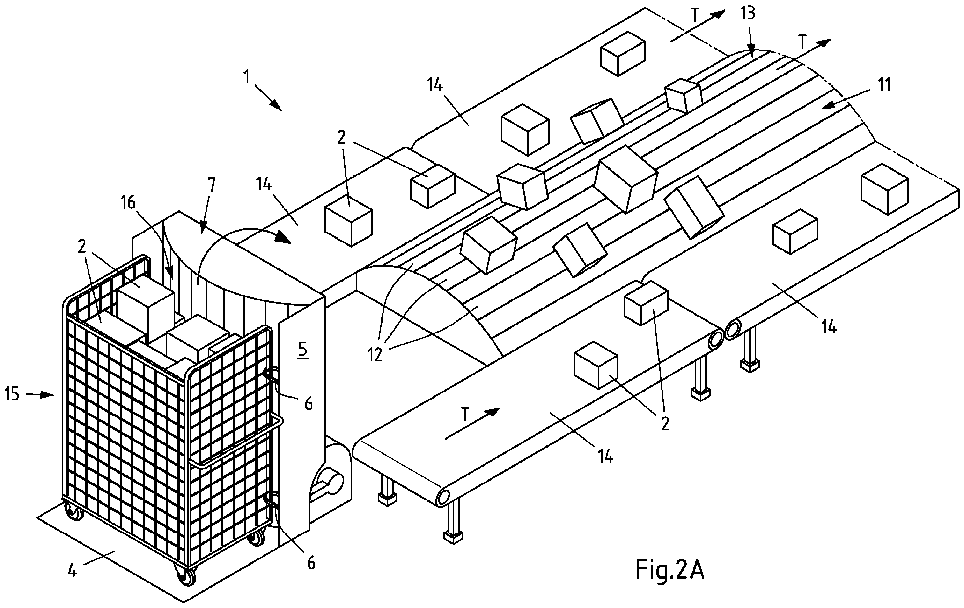

In den Fig. 2A-C ist das Entladen und Vereinzeln von Packstücken 2 mit dem Vereinzelungsentlader 1 aus der Fig. 1 dargestellt. In der Fig. 2A befindet sich die Schwenkeinrichtung 7 in der Aufnahmeausrichtung und die mit der Schwenkeinrichtung 7 verbundene Riemenfördervorrichtung 8 in der Ausgangsstellung. In dieser Stellung des Vereinzelungsentladers 1 wird ein Behälter 15, bei dem es sich im dargestellten und insoweit bevorzugten Ausführungsbeispiel um einen Rollbehälter handelt, in die Aufnahme 3 der Halteeinrichtung 5 der Schwenkeinrichtung 7 geschoben. Dabei wird der Behälter 15 auf die Aufstandsfläche 4 der Halteeinrichtung 5 geschoben, die zusammen mit der Schwenkeinrichtung 7 und der Riemenfördervorrichtung 8 geschwenkt werden kann. Der Behälter 15 wird zudem über lediglich schematisch dargestellte Haltemittel 6 fest mit der Schwenkeinrichtung 7 verbunden. Zudem wird bei dem vorliegenden Behälter 15 noch eine seitliche bedarfsweise wenigstens teilweise verschließbare Öffnung 16 geöffnet, wenn diese nicht schon vor dem Einschieben des Behälters 15 in die Aufnahme 3 der Schwenkeinrichtung 7 geöffnet worden ist. Je nach Ausgestaltung des Behälters 15 kann an der zur Riemenfördervorrichtung 8 weisenden Seite des Behälters 15 wenigstens eine Klappe und/oder wenigstens ein Gurt gelöst werden, um den Behälter 15 an der entsprechenden Seite seitlich zu öffnen. Mithin müssen die Packstücke 2 des Behälters 15 nicht kopfseitig ausgeschüttet werden, sondern können wenigstens teilweise bereits durch die seitliche Öffnung 16 in Kontakt mit der Riemenfördervorrichtung 8 gelangen.

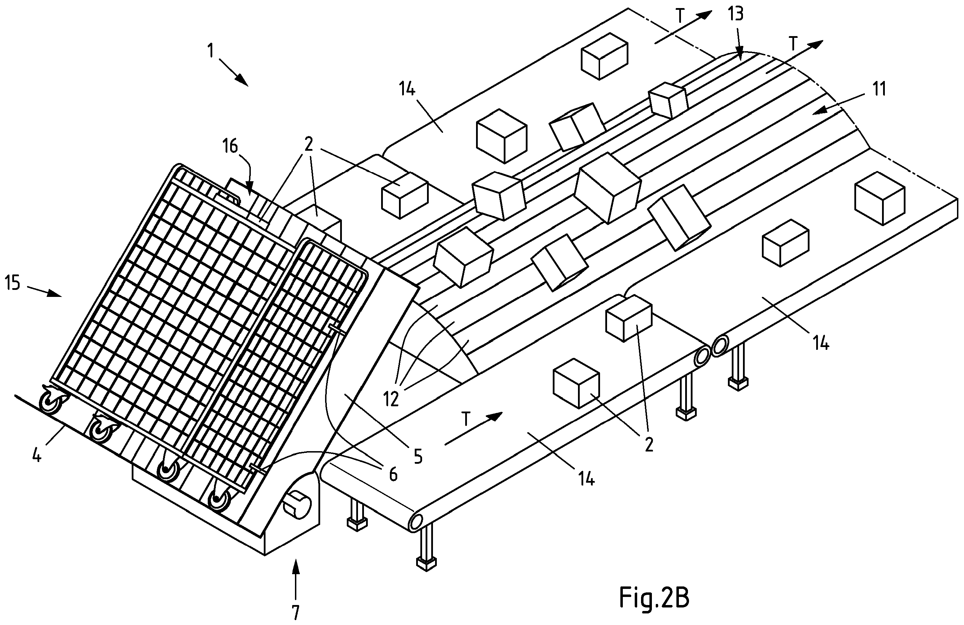

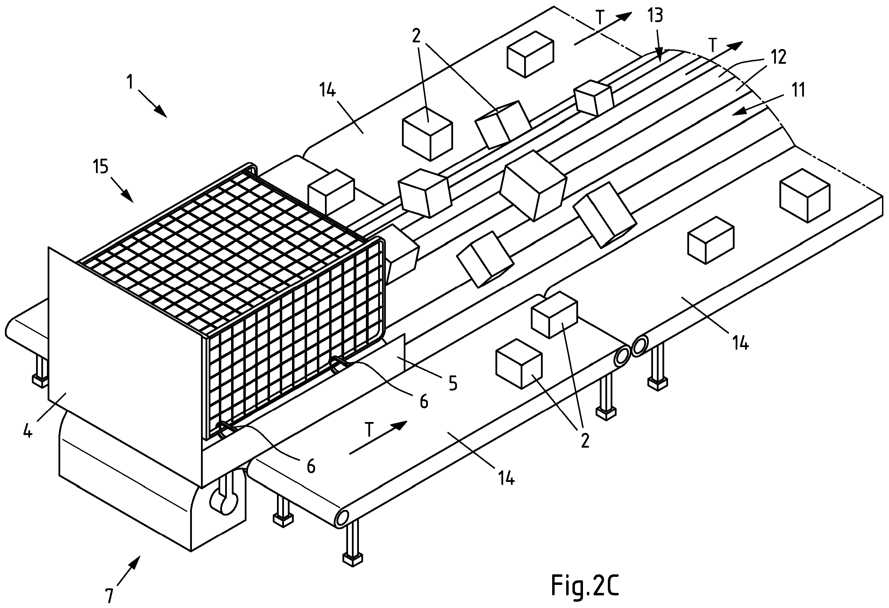

Nachdem der Behälter 15 in der Aufnahme 3 der Halteeinrichtung 5 aufgenommen worden ist, wird die Schwenkeinrichtung 7 mit der Riemenfördervorrichtung 8 und mit dem Behälter 15 geschwenkt, und zwar zunächst in eine in der Fig. 2B dargestellte Zwischenstellung. Dabei behält der Behälter 15 seine Ausrichtung relativ zur Riemenfördervorrichtung 8 wenigstens im Wesentlichen bei. Gegebenenfalls rutscht der Behälter 15 noch etwas näher an die Riemenfördervorrichtung 8 heran. Die Schwenkeinrichtung 7 wird dabei nicht nur gekippt, sondern auch insgesamt angehoben. Ohne zwischenzeitlich angehalten zu werden, wird die Schwenkeinrichtung 7 bis in die Entleerungsausrichtung geschwenkt, die in der Fig. 2C dargestellt ist. Dabei befindet sich die Schwenkeinrichtung 7 wenigstens überwiegend in einer horizontalen Ausrichtung, und zwar ebenso wie der Behälter 15 und die Riemenfördervorrichtung 8. Letztere ist dabei in der Entladestellung angeordnet.

Durch die seitliche Öffnung 16 des Behälters 15, die nun nach unten weist, gelangen wenigstens einige Packstücke 2 in Kontakt mit der Riemenfördervorrichtung 8 bereits bevor die Packstücke 2 überhaupt aus dem Behälter 15 ausgeladen worden sind. Daher muss der Behälter 2 im vorliegenden Ausführungsbeispiel nicht annähernd auf den Kopf gestellt bzw. gedreht werden, um die Packstücke 2 aus dem Behälter 15 zu entladen, was nötig wäre, wenn die Packstücke 2 aus einem Behälter ohne eine seitliche Öffnung, nur mit einer oberen Öffnung entladen werden müssten. Beim Beladen des dargestellten Behälters 15 gibt es eine Setzbewegung der Packstücke 2 nach unten. Nach dem Schwenken des Behälters 15 mit der Schwenkeinrichtung 7 findet eine erneute Setzbewegung nach unten statt, die jedoch nun bezogen auf den Behälter 15 zur Seite und in Richtung der Riemenfördervorrichtung 8 wirkt. Die Packstücke 2 werden mithin wenigstens teilweise weniger durch Ausschütten als durch die Riemenfördervorrichtung 8 entladen, was gleichzeitig und damit platzsparend mit einem Vereinzeln einhergeht.

Hierzu werden die nebeneinander angeordneten Riemenförderer 9 der Riemenfördervorrichtung 8 in Gang gesetzt, wenn die Schwenkeinrichtung 7 die Entleerungsausrichtung erreicht hat, wobei der mittlere Riemenförderer 9 die geringste Transportgeschwindigkeit aufweist, die sich zu den Seiten jeweils schrittweise steigert. Die Packstücke 2 werden also vorzugsweise je nach der Geschwindigkeitsversteilung mit einem entsprechenden V-förmigen oder U-förmigen Geschwindigkeitsprofil aus dem Behälter 15 abgezogen und rutschen dabei mehr oder weniger infolge der eigenen Gewichtskraft und der konvexen Wölbung der Transportfläche 10 der Riemenfördervorrichtung 8 seitlich, d.h. quer zur Transportrichtung T der Riemenfördervorrichtung 8, von der Riemenfördervorrichtung 8 herunter. Von der Riemenfördervorrichtung 8 oder der Riemenfördereinheit 11 kommend werden die Packstücke 2 von zu beiden Seiten seitlich neben der Riemenfördervorrichtung 8 oder der Riemenfördereinheit 11 angeordnete Seitenriemenförderern 14 aufgenommen, die die Packstücke 2 in dieselbe Transportrichtung T weiterbewegen wie die Riemenfördervorrichtung 8 und die Riemenfördereinheit 11. Die in der Transportrichtung T nacheinander angeordneten Seitenriemenförderer 14 werden schrittweise mit einer immer höheren Transportgeschwindigkeit betrieben, um die Packstücke 2 entlang des Transportwegs weiter zu vereinzeln.

Packstücke 2 die nicht von der Riemenfördervorrichtung 8 an die Seitenriemenförderer 14 abgegeben werden, gibt die Riemenfördervorrichtung 8 an die Riemenfördereinheit 11 weiter, die sich in der Transportrichtung T an die Riemenfördervorrichtung 8 anschließt. Die Transportrichtungen T der Riemenfördervorrichtung 8 und der Riemenfördereinheit 11 stimmen ebenso überein, wie der Umstand, dass die nebeneinander angeordneten Riemenförderer 12 der Riemenfördereinheit 11 von innen nach außen schrittweise schneller bewegt werden und dass die aus den einzelnen Riemenförderern 12 zusammengesetzte Transportfläche 13 der Riemenfördereinheit 11 unter Bildung eines nach unten geöffneten U-förmigen Querschnitts konvex nach oben gebogen ist. Mithin werden die Packstücke 2, die noch nicht von der Riemenfördervorrichtung 8 an die Seitenriemenförderer 14 abgegeben worden sind, mit dem weiteren Transport von der Riemenfördereinheit 11 an die Seitenriemenförderer 14 abgegeben.

Es ergibt sich, dass die verschiedenen Packstücke 2 sehr unterschiedliche Transportwege entlang des Vereinzelungsentladers 1 nehmen, was beispielsweise durch die unterschiedliche Anordnung der Packstücke 2 im Behälter 15, die unterschiedliche Größe der Packstücke 2 und/oder das unterschiedliche Gewicht der Packstücke 2 bedingt sein kann. Die unterschiedlichen Transportwege gehen dabei in vielen Fällen auch mit unterschiedlichen Geschwindigkeitsprofilen entlang der Transportwege einher. Beides zusammen führt letztlich zu einer kompakten und effizienten Entladung und Vereinzelung der Packstücke 2.

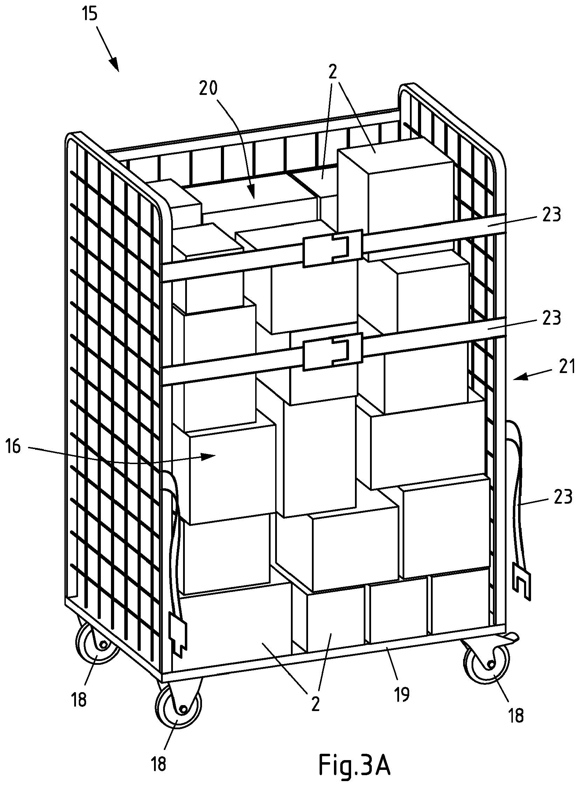

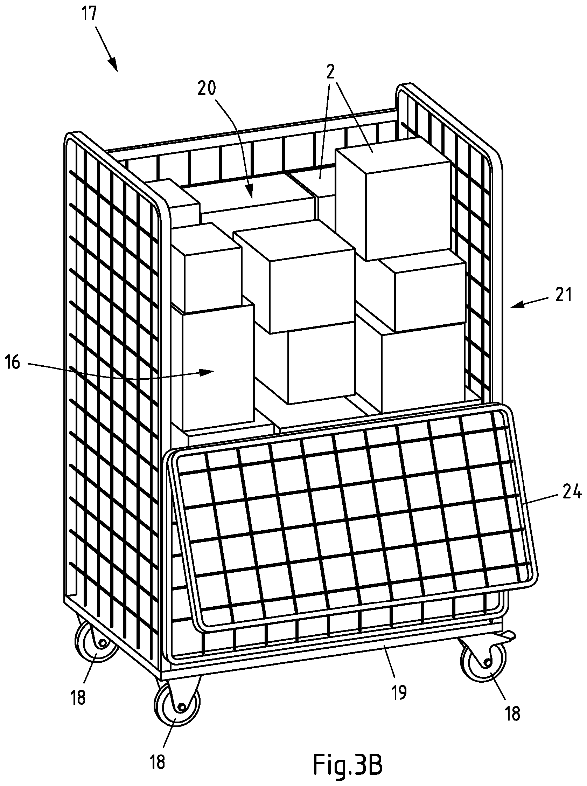

In den Fig. 3A-B sind Behälter 15,17 dargestellt, die in besonderem Maße für die Verwendung mit dem Vereinzelungsentlader 1 geeignet sind. Grundsätzlich sind aber auch andere, sehr unterschiedliche Behälter geeignet. In den Fig. 3A-B sind sogenannte Rollbehälter dargestellt. Die Behälter 15,17 weisen bodenseitig Rollen 18 auf, mit denen die Behälter 15,17 verfahren werden können. Beispielsweise können die Behälter 15,17 auf die Aufstandsfläche 4 des Vereinzelungsentladers 1 geschoben werden. Oberhalb des Bodens 19 bilden die Behälter 15,17 einen Laderaum 20 zur Aufnahme von Packstücken 2. Damit die Behälter 15,17 einfach mit Packstücken 2 beladen werden können, ist in wenigstens einer Seitenwand 21 des Behälters 15,17 eine seitliche Öffnung 16,22 vorgesehen, die wenigstens teilweise geschlossen werden kann, wenn der Behälter 15,17 verfahren wird, damit die Packstücke 2 nicht herausfallen. Die Öffnung 16 kann sich über die gesamte Höhe der entsprechenden Seitenwand 21 des Behälters 15 erstrecken, wie dies in der Fig. 3A dargestellt ist. Alternativ kann sich die seitliche Öffnung 22 aber auch nur über einen Teil der Seitenwand 21 erstrecken, wie dies in der Fig. 3B dargestellt ist. Zum wenigstens teilweisen Verschließen der seitlichen Öffnung 16 sind bei dem Behälter 15 der Fig. 3A über die Höhe der Öffnung 16 mehrere Gurte 23 verteil angeordnet, die quer zur Öffnung 16 abgespannt bzw. wenigstens einseitig wieder gelöst werden können.

Bei dem Behälter 17 der Fig. 3B ist dagegen eine Klappe 24 vorgesehen, die zum Schließen nach oben und zum Öffnen, also zum Freigeben der Öffnung 22 in der Seitenwand 21, nach unten geschwenkt werden kann. Grundsätzlich könnte die Klappe 24 alternativ auch zur Seite geschwenkt werden.

### Bezugszeichenliste

- 1: Vereinzelungsentlader
- 2: Packstücke
- 3: Aufnahme
- 4: Aufstandsfläche
- 5: Halteeinrichtung
- 6: Haltemittel
- 7: Schwenkeinrichtung
- 8: Riemenfördervorrichtung
- 9: Riemenförderer
- 10: Transportfläche
- 11: Riemenfördereinheit
- 12: Riemenförderer
- 13: Transportfläche
- 14: Seitenriemenförderer
- 15: Behälter
- 16: Öffnung
- 17: Behälter
- 18: Rollen
- 19: Boden
- 20: Laderaum
- 21: Seitenwand
- 22: Öffnung
- 23: Gurt
- 24: Klappe

## Patentansprüche

1. Vereinzelungsentlader (1) zum Entladen und Vereinzeln von in einem Behälter (15,17) bereitgestellten Packstücken (2), mit einer Schwenkeinrichtung (7) zum Schwenken des Behälters (15,17) von einer vorwiegend vertikalen Aufnahmeausrichtung zum Aufnehmen des Behälters (15,17) in eine vorwiegend horizontale Entleerungsausrichtung zum Entleeren des Behälters (15,17) und zurück und mit einer Halteeinrichtung (5) zum Halten des Behälters (15,17) an der Schwenkeinrichtung (7) während des Schwenkens der Schwenkeinrichtung (7) von der Aufnahmeausrichtung in die Entleerungsausrichtung, wobei eine Riemenfördervorrichtung (8) zum Fördern der Packstücke (2) derart mit der Schwenkeinrichtung (7) verbunden ist, so dass die Riemenfördervorrichtung (8) durch das Schwenken der Schwenkeinrichtung (7) von der Aufnahmeausrichtung in die Entleerungsausrichtung von einer vorwiegend vertikalen Ausgangsstellung in eine vorwiegend horizontale Entladestellung verstellbar ist,
**dadurch gekennzeichnet, dass**
die Riemenfördervorrichtung (8) eine konvex gewölbte Transportfläche (10) der Riemenfördervorrichtung (8) zum Transport der Packstücke (2) bildet und dass die Transportfläche (10) in wenigstens einem Querschnitt senkrecht zur Transportrichtung (T) der Riemenfördervorrichtung (8) wenigstens im Wesentlichen U-förmig gebogen ist.

2. Vereinzelungsentlader nach Anspruch 1,
**dadurch gekennzeichnet, dass**
die Riemenfördervorrichtung (8) mehrere, vorzugsweise wenigstens drei, weiter vorzugsweise wenigstens fünf, insbesondere wenigstens sieben, nebeneinander angeordnete Riemenförderer (9) umfasst und, insbesondere, die Riemenförderer (9) wenigstens im Wesentlichen parallele Transportrichtungen (T) aufweisen und dass die Transportgeschwindigkeit der inneren Riemenförderer (9) der Riemenfördervorrichtung (8) langsamer als die Transportgeschwindigkeit der äußeren Riemenförderer (9) der Riemenfördervorrichtung (8) ist und, insbesondere, die Transportgeschwindigkeiten der Riemenförderer (9) von innen nach außen quer zur Transportrichtung (T) der Riemenfördervorrichtung (8) schrittweise zunehmen.

3. Vereinzelungsentlader nach Anspruch 2,
**dadurch gekennzeichnet, dass**
die Riemenförderer (9) der Riemenfördervorrichtung (8) unmittelbar angrenzend zueinander vorgesehen sind und/oder dass die Riemenförderer (9) der Riemenfördervorrichtung (8) wenigstens im Wesentlichen gleich lang ausgebildet sind und/dass die in Transportrichtung (T) hinteren Enden der Riemenförderer (9) der Riemenfördervorrichtung (8) wenigstens im Wesentlichen auf einer Ebene liegen und/oder dass die in Transportrichtung (T) vorderen Enden der Riemenförderer (9) der Riemenfördervorrichtung (8) wenigstens im Wesentlichen auf einer Ebene liegen.

4. Vereinzelungsentlader nach einem der Ansprüche 1 bis 3,
**dadurch gekennzeichnet, dass**
eine Riemenfördereinheit (11) vorgesehen ist, dass die Riemenfördereinheit (11) und die Riemenfördervorrichtung (8) in der Entladestellung wenigstens im Wesentlichen parallele Transportrichtungen (T) aufweisen und dass, vorzugsweise, die Riemenfördereinheit (11) und die Riemenfördervorrichtung (8) wenigstens im Wesentlichen hintereinander angrenzend und, insbesondere, fluchtend zueinander ausgerichtet sind.

5. Vereinzelungsentlader nach Anspruch 4,
**dadurch gekennzeichnet, dass**
die Riemenfördereinheit (11) mehrere, vorzugsweise wenigstens drei, weiter vorzugsweise wenigstens fünf, insbesondere wenigstens sieben, nebeneinander angeordnete Riemenförderer (12) umfasst und dass, vorzugsweise, die Riemenförderer (12) wenigstens im Wesentlichen parallele Transportrichtungen (T) aufweisen und/oder dass die Transportgeschwindigkeit der inneren Riemenförderer (12) der Riemenfördereinheit (11) langsamer als die Transportgeschwindigkeit der äußeren Riemenförderer (12) der Riemenfördereinheit (11) ist, insbesondere die Transportgeschwindigkeiten der Riemenförderer (12) von innen nach außen quer zur Transportrichtung (T) der Riemenfördereinheit (11) schrittweise zunehmen.

6. Vereinzelungsentlader nach Anspruch 5,
**dadurch gekennzeichnet, dass**
die Riemenförderer (12) der Riemenfördereinheit (11) unmittelbar angrenzend zueinander vorgesehen sind und/oder dass die Riemenförderer (12) der Riemenfördereinheit (11) wenigstens im Wesentlichen gleich lang ausgebildet sind und/oder dass die in Transportrichtung (T) hinteren Enden der Riemenförderer (12) der Riemenfördereinheit (11) wenigstens im Wesentlichen auf einer Ebene liegen und/oder dass die in Transportrichtung (T) vorderen Enden der Riemenförderer (12) der Riemenfördereinheit (11) wenigstens im Wesentlichen auf einer Ebene liegen.

7. Vereinzelungsentlader nach einem der Ansprüche 4 bis 6,
**dadurch gekennzeichnet, dass**
die Riemenfördereinheit (11) eine konvex gewölbte Transportfläche (13) der Riemenfördereinheit (11) zum Transport der Packstücke (2) bildet und dass, vorzugsweise, die Transportfläche (13) in wenigstens einem Querschnitt senkrecht zur Transportrichtung (T) der Riemenfördereinheit (11) wenigstens im Wesentlichen U-förmig gebogen ist.

8. Vereinzelungsentlader nach einem der Ansprüche 1 bis 7,
**dadurch gekennzeichnet, dass**
sich zu beiden Seiten der Riemenfördervorrichtung (8) in der Entladestellung sich jeweils wenigstens ein Seitenriemenförderer (14) anschließt und/oder sich zu beiden Seiten der Riemenfördereinheit (11) sich jeweils wenigstens ein Seitenriemenförderer (14) anschließt und dass, vorzugsweise, wenigstens zu einer Seite der Riemenfördervorrichtung (8) und/oder der Riemenfördereinheit (11) mehrere mit unterschiedlichen Transportgeschwindigkeiten betreibbare Seitenriemenförderer (14), insbesondere fluchtend, hintereinander angeordnet sind.

9. Vereinzelungsentlader nach einem der Ansprüche 1 bis 8,
**dadurch gekennzeichnet, dass**
die Halteeinrichtung (5) eine Aufnahme (3) und/oder eine Aufstandsfläche (4) für den Behälter (15,17) umfasst, dass die Aufnahme (3) und/oder die Aufstandsfläche (4) zusammen mit der Riemenfördervorrichtung (8) von der Ausgangsstellung in die Entladestellung verstellbar ist und dass, vorzugsweise, die Aufstandsfläche (4) und die Riemenfördervorrichtung (8) in einem Winkel von 60° bis 90°, vorzugsweise 70° bis 90°, insbesondere 80° bis 90°, zueinander stehende Ebenen definieren.

10. Verfahren zum Betrieb eines Vereinzelungsentladers nach einem der Ansprüche 1 bis 9,
bei dem der Behälter (15,17) über die Halteeinrichtung (5) an der Schwenkeinrichtung (7) gehalten wird,
bei dem der Behälter (15,17) mit der Schwenkeinrichtung (7) von der Aufnahmeausrichtung in die Entleerungsausrichtung geschwenkt wird und
bei dem die Packstücke (2) des Behälters (15,17) wenigstens teilweise von der Riemenfördervorrichtung (8) aus dem Behälter (15,17) transportiert werden.

11. Verfahren nach Anspruch 10,
bei dem der Behälter (15,17) mit einer der Riemenfördervorrichtung (8) zugewandten seitlichen Öffnung (16) an der Schwenkeinrichtung (7) gehalten wird und
bei dem, vorzugsweise, Packstücke (2) mit der Riemenfördervorrichtung (8) in der Entladestellung über die seitliche Öffnung (16) des Behälters (15,17) in Kontakt mit der Riemenfördervorrichtung (8) gelangen.

12. Verfahren nach Anspruch 10 oder 11,
bei dem der wenigstens eine Riemenförderer (9) der Riemenfördervorrichtung (8), wenigstens mit der Riemenfördervorrichtung (8) in der Entladestellung, in Transportrichtung (T) bewegt wird und/oder
bei dem die nebeneinander vorgesehenen Riemenförderer (9) der Riemenfördervorrichtung (8) jeweils von innen nach außen schrittweise mit einer höheren Transportgeschwindigkeit bewegt werden und/oder bei dem die Packstücke (2) wenigstens teilweise entlang der konvexen Transportfläche (10) der Riemenfördervorrichtung (8) zur Seite nach unten auf wenigstens einen Seitenriemenförderer (14) rutschen und/oder bei dem die Packstücke (2) wenigstens teilweise entlang von mehreren, vorzugsweise fluchtend, hintereinander angeordneten Seitenriemenförderern (14) vereinzelt werden.

13. Verfahren nach einem der Ansprüche 10 bis 12,
bei dem die Packstücke (2) wenigstens teilweise von der Riemenfördervorrichtung (8) in der Entladestellung in der Transportrichtung (T) der Riemenfördervorrichtung (8) an eine sich, vorzugsweise fluchtend, an die Riemenfördervorrichtung (8) anschließende Riemenfördereinheit (11) übergeben werden und
bei dem, vorzugsweise, die übergebenen Packstücke (2) wenigstens teilweise von der Riemenfördereinheit (11) in einer Transportrichtung (T) wenigstens im Wesentlichen parallel zur Transportrichtung (T) der Riemenfördervorrichtung (8) transportiert und/oder die nebeneinander vorgesehenen Riemenförderer (12) der Riemenfördereinheit (11) jeweils von innen nach außen schrittweise mit einer höheren Transportgeschwindigkeit bewegt werden.

14. Verfahren nach einem der Ansprüche 10 bis 13,
bei dem die Packstücke (2) wenigstens teilweise entlang der konvexen Riemenfördereinheit (11) zur Seite nach unten auf wenigstens einen Seitenriemenförderer (14) rutschen und/oder dass die Packstücke (2) wenigstens teilweise entlang von mehreren, vorzugsweise fluchtend, hintereinander angeordneten Seitenriemenförderern (14) vereinzelt werden und/oder
bei dem der Behälter (15,17) in der Aufnahmeausrichtung der Schwenkeinrichtung (7) auf die Aufstandsfläche (4) für den Behälter (15,147) gefahren oder gestellt und, vorzugsweise, der auf der Aufstandsfläche (4) stehende Behälter (15,17) während des Schwenkens der Schwenkeinrichtung (7) von der Halteeinrichtung (5) gehalten, insbesondere von der Aufnahme (3) aufgenommen, wird.

## Claims

1. Singularizing unloader (1) for unloading and singularizing packages (2) provided in a container (15, 17), having a pivoting device (7) for pivoting the container (15, 17) from a predominantly vertical receiving orientation for receiving the container (15, 17) to a predominantly horizontal emptying orientation for emptying the container (15, 17) and back and having a holding device (5) for holding the container (15, 17) on the pivoting device (7) during the pivoting of the pivoting device (7) from the receiving orientation to the emptying orientation, wherein a belt conveyor device (8) for conveying the packages (2) is connected to the pivoting device (7) in such manner that the belt conveyor device (8) is adjustable from a predominantly vertical initial position to a predominantly horizontal unloading position by the pivoting of the pivoting device (7) from the receiving orientation to the emptying orientation,
**characterised in that**
the belt conveyor device (8) forms a convexly curved transport surface (10) of the belt conveyor device (8) for transporting the packages (2) and **in that** the transport surface (10) is bent at least substantially U-shaped in at least one cross-section perpendicular to the transport direction (T) of the belt conveyor device (8).

2. Singularizing unloader according to claim 1,
**characterised in that**
the belt conveyor device (8) comprises a plurality of, preferably at least three, further preferably at least five, in particular at least seven, belt conveyors (9) arranged side by side and, in particular, the belt conveyors (9) have at least substantially parallel transport directions (T) and **in that** the transport speed of the inner belt conveyors (9) of the belt conveyor device (8) is slower than the transport speed of the outer belt conveyors (9) of the belt conveyor device (8) and, in particular, the transport speeds of the belt conveyors (9) increase stepwise from the inside outwards transversely to the transport direction (T) of the belt conveyor device (8).

3. Singularizing unloader according to claim 2,
**characterised in that**
the belt conveyors (9) of the belt conveyor device (8) are provided directly adjacent to one another and/or **in that** the belt conveyors (9) of the belt conveyor device (8) are designed to be at least substantially of the same length and/or **in that** the rear ends of the belt conveyors (9) of the belt conveyor device (8) in the transport direction (T) lie at least substantially on one plane and/or **in that** the front ends of the belt conveyors (9) of the belt conveyor device (8) in the transport direction (T) lie at least substantially on one plane.

4. Singularizing unloader according to any one of claims 1 to 3,
**characterised in that**
a belt conveyor unit (11) is provided, **in that** the belt conveyor unit (11) and the belt conveyor device (8) in the unloading position have at least substantially parallel transport directions (T) and **in that**, preferably, the belt conveyor unit (11) and the belt conveyor device (8) are orientated at least substantially adjacently behind one another and, in particular, aligned with one another.

5. Singularizing unloader according to claim 4,
**characterised in that**
the belt conveyor unit (11) comprises a plurality of, preferably at least three, further preferably at least five, in particular at least seven, belt conveyors (12) arranged side by side and **in that**, preferably, the belt conveyors (12) have at least substantially parallel transport directions (T) and/or **in that** the transport speed of the inner belt conveyors (12) of the belt conveyor unit (11) is slower than the transport speed of the outer belt conveyors (12) of the belt conveyor unit (11), in particular the transport speeds of the belt conveyors (12) increase stepwise from the inside outwards transversely to the transport direction (T) of the belt conveyor unit (11).

6. Singularizing unloader according to claim 5,
**characterised in that**
the belt conveyors (12) of the belt conveyor unit (11) are provided directly adjacent to one another and/or **in that** the belt conveyors (12) of the belt conveyor unit (11) are designed to be at least substantially of the same length and/or **in that** the rear ends of the belt conveyors (12) of the belt conveyor unit (11) in the transport direction (T) lie at least substantially on one plane and/or in that the front ends of the belt conveyors (12) of the belt conveyor unit (11) in the transport direction (T) lie at least substantially on one plane.

7. Singularizing unloader according to any one of claims 4 to 6,
**characterised in that**
the belt conveyor unit (11) forms a convexly curved transport surface (13) of the belt conveyor unit (11) for transporting the packages (2) and **in that**, preferably, the transport surface (13) is bent at least substantially U-shaped in at least one cross-section perpendicular to the transport direction (T) of the belt conveyor unit (11).

8. Singularizing unloader according to any one of claims 1 to 7,
**characterised in that**
on both sides of the belt conveyor device (8) in the unloading position in each case at least one side belt conveyor (14) adjoins and/or on both sides of the belt conveyor unit (11) in each case at least one side belt conveyor (14) adjoins and **in that**, preferably, at least on one side of the belt conveyor device (8) and/or the belt conveyor unit (11) a plurality of side belt conveyors (14) operable at different transport speeds are arranged, in particular aligned, behind one another.

9. Singularizing unloader according to any one of claims 1 to 8,
**characterised in that**
the holding device (5) comprises a receptacle (3) and/or a support surface (4) for the container (15, 17), **in that** the receptacle (3) and/or the support surface (4) is adjustable together with the belt conveyor device (8) from the initial position to the unloading position and **in that**, preferably, the support surface (4) and the belt conveyor device (8) define planes disposed at an angle of 60° to 90°, preferably 70° to 90°, in particular 80° to 90°, relative to one another.

10. Method for operating a singularizing unloader according to any one of claims 1 to 9,
in which the container (15, 17) is held via the holding device (5) on the pivoting device (7),
in which the container (15, 17) is pivoted with the pivoting device (7) from the receiving orientation to the emptying orientation and
in which the packages (2) of the container (15, 17) are at least partially transported out of the container (15, 17) by the belt conveyor device (8).

11. Method according to claim 10,
in which the container (15, 17) is held on the pivoting device (7) with a lateral opening (16) facing the belt conveyor device (8) and
in which, preferably, packages (2), with the belt conveyor device (8) in the unloading position, come into contact with the belt conveyor device (8) via the lateral opening (16) of the container (15, 17).

12. Method according to claim 10 or 11,
in which the at least one belt conveyor (9) of the belt conveyor device (8) is moved, at least with the belt conveyor device (8) in the unloading position, in the transport direction (T) and/or
in which the belt conveyors (9) of the belt conveyor device (8) provided side by side are moved in each case from the inside outwards stepwise at a higher transport speed and/or
in which the packages (2) slide at least partially along the convex transport surface (10) of the belt conveyor device (8) to the side downwards onto at least one side belt conveyor (14) and/or
in which the packages (2) are singularized at least partially along a plurality of side belt conveyors (14) arranged, preferably aligned, behind one another.

13. Method according to any one of claims 10 to 12,
in which the packages (2) are transferred at least partially from the belt conveyor device (8) in the unloading position in the transport direction (T) of the belt conveyor device (8) to a belt conveyor unit (11) adjoining the belt conveyor device (8), preferably in an aligned manner, and
in which, preferably, the transferred packages (2) are transported at least partially by the belt conveyor unit (11) in a transport direction (T) at least substantially parallel to the transport direction (T) of the belt conveyor device (8) and/or the belt conveyors (12) of the belt conveyor unit (11) provided side by side are moved in each case from the inside outwards stepwise at a higher transport speed.

14. Method according to any one of claims 10 to 13,
in which the packages (2) slide at least partially along the convex belt conveyor unit (11) to the side downwards onto at least one side belt conveyor (14) and/or in that the packages (2) are singularized at least partially along a plurality of side belt conveyors (14) arranged, preferably aligned, behind one other and/or in which the container (15, 17), in the receiving orientation of the pivoting device (7), is moved or placed onto the support surface (4) for the container (15, 147) and, preferably, the container (15, 17) standing on the support surface (4) is held by the holding device (5), in particular received by the receptacle (3), during the pivoting of the pivoting device (7).

## Revendications

1. Déchargeur-séparateur (1) pour décharger et séparer des colis (2) préparés dans un conteneur (15, 17), avec un dispositif de pivotement (7) pour faire pivoter le conteneur (15, 17) d'une orientation de réception, principalement verticale, pour recevoir le conteneur (15, 17) à une orientation de vidange, principalement horizontale, pour vider le conteneur (15, 17) et retour et avec un dispositif de tenue (5) pour tenir le conteneur (15, 17) sur le dispositif de pivotement (7) pendant le pivotement du dispositif de pivotement (7) de l'orientation de réception à l'orientation de vidange, dans lequel un dispositif convoyeur à courroie (8) pour transporter des colis (2) est relié au dispositif de pivotement (7) de sorte que le dispositif convoyeur à courroie (8) es ajustable d'une position initiale, principalement verticale, à une position de déchargement, principalement horizontale par le pivotement du dispositif de pivotement (7) de l'orientation de réception à l'orientation de vidange,
**caractérisé en ce que**
le dispositif convoyeur à courroie (8) forme une surface de transport (10) convexe bombée du dispositif convoyeur à courroie (8) pour le transport des colis (2) et **en ce que** la surface de transport (10) est courbée au moins essentiellement en forme de U dans au moins une section transversale perpendiculaire à la direction de transport (T) du dispositif convoyeur à courroie (8).

2. Déchargeur-séparateur selon la revendication 1,
**caractérisé en ce que**
le dispositif convoyeur à courroie (8) comporte plusieurs, de préférence au moins trois, de préférence encore au moins cinq, en particulier au moins sept, convoyeurs à courroie (9) agencés côte à côte et, en particulier, les convoyeurs à courroie (9) présentent des directions de transport (T) au moins essentiellement parallèles et **en ce que** la vitesse de transport des convoyeurs à courroie intérieurs (9) du dispositif convoyeur à courroie (8) est plus lente que la vitesse de transport des convoyeurs à courroie extérieurs (9) du dispositif convoyeur à courroie (8) et, en particulier, les vitesses de transport des convoyeurs à courroie (9) augmentent progressivement de l'intérieur vers l'extérieur transversalement à la direction de transport (T) du dispositif convoyeur à courroie (8).

3. Déchargeur-séparateur selon la revendication 2,
**caractérisé en ce que**
les convoyeurs à courroie (9) du dispositif convoyeur à courroie (8) sont prévus directement adjacents l'un à l'autre et/ou **en ce que** les convoyeurs à courroie (9) du dispositif convoyeur à courroie (8) sont configurés au moins essentiellement de la même longueur et/ou **en ce que** les extrémités arrière des convoyeurs à courroie (9) du dispositif convoyeur à courroie (8) dans la direction de transport (T) se trouvent au moins essentiellement sur un plan et/ou **en ce que** les extrémités avant des convoyeurs à courroie (9) du dispositif convoyeur à courroie (8) dans la direction de transport (T) se trouvent au moins essentiellement sur un plan.

4. Déchargeur-séparateur selon l'une des revendications 1 à 3,
**caractérisé en ce que**
une unité de convoyeur à courroie (11) es prévue, **en ce que** l'unité de convoyeur à courroie (11) et le dispositif convoyeur à courroie (8) dans la position de déchargement présentent des directions de transport (T) au moins essentiellement parallèles et **en ce que**, de préférence, l'unité de convoyeur à courroie (11) et le dispositif convoyeur à courroie (8) sont orientés au moins essentiellement adjacents l'un derrière l'autre et, en particulier, en alignement l'un par rapport à l'autre.

5. Déchargeur-séparateur selon la revendication 4,
**caractérisé en ce que**
l'unité de convoyeur à courroie (11) comprend plusieurs, de préférence au moins trois, de préférence encore au moins cinq, en particulier au moins sept, convoyeurs à courroie (12) agencés côte à côte et **en ce que**, de préférence, les convoyeurs à courroie (12) présentent des directions de transport (T) au moins essentiellement parallèles et/ou **en ce que** la vitesse de transport des convoyeurs à courroie intérieurs (12) de l'unité de convoyeur à courroie (11) est plus lente que la vitesse de transport des convoyeurs à courroie extérieurs (12) de l'unité de convoyeur à courroie (11), en particulier les vitesses de transport des convoyeurs à courroie (12) augmentent progressivement de l'intérieur vers l'extérieur transversalement à la direction de transport (T) de l'unité de convoyeur à courroie (11).

6. Déchargeur-séparateur selon la revendication 5,
**caractérisé en ce que**
les convoyeurs à courroie (12) de l'unité de convoyeur à courroie (11) sont prévus directement adjacents l'un à l'autre et/ou **en ce que** les convoyeurs à courroie (12) de l'unité de convoyeur à courroie (11) sont configurés au moins essentiellement de la même longueur et/ou **en ce que** les extrémités arrière des convoyeurs à courroie (12) de l'unité de convoyeur à courroie (11) dans la direction de transport (T) se trouvent au moins essentiellement sur un plan et/ou **en ce que** les extrémités avant des convoyeurs à courroie (12) de l'unité de convoyeur à courroie (11) dans la direction de transport (T) se trouvent au moins essentiellement sur un plan .

7. Déchargeur-séparateur selon l'une des revendications 4 à 6,
**caractérisé en ce que**
l'unité de convoyeur à courroie (11) forme une surface de transport (13) convexe bombée de l'unité de convoyeur à courroie (11) pour le transport des colis (2) et **en ce que**, de préférence, la surface de transport (13) est courbée au moins essentiellement en forme de U dans au moins une section transversale perpendiculaire à la direction de transport (T) de l'unité de convoyeur à courroie (11).

8. Déchargeur-séparateur selon l'une des revendications 1 à 7,
**caractérisé en ce que**
des deux côtés du dispositif convoyeur à courroie (8) dans la position de déchargement, se raccorde respectivement au moins un convoyeur à courroie latérale (14) et/ou des deux côtés de l'unité de convoyeur à courroie (11), se raccorde respectivement au moins un convoyeur à courroie latérale (14) et **en ce que**, de préférence, au moins d'un côté du dispositif convoyeur à courroie (8) et/ou de l'unité de convoyeur à courroie (11), plusieurs convoyeurs à courroie latéraux (14) pouvant être actionnés à des vitesses de transport différentes sont agencés, en particulier en alignement, l'un derrière l'autre.

9. Déchargeur-séparateur selon l'une des revendications 1 à 8,
**caractérisé en ce que**
le dispositif de tenue (5) comprend un logement (3) et/ou une surface d'appui (4) pour le conteneur (15, 17), **en ce que** le logement (3) et/ou la surface d'appui (4) es ajustable conjointement avec le dispositif convoyeur à courroie (8) de la position initiale à la position de déchargement et **en ce que**, de préférence, la surface d'appui (4) et le dispositif convoyeur à courroie (8) définissent des plans disposés l'un par rapport à l'autre selon un angle de 60° à 90°, de préférence de 70° à 90°, en particulier de 80° à 90°.

10. Procédé d'utilisation d'un déchargeur-séparateur selon l'une des revendications 1 à 9,
dans lequel le conteneur (15, 17) est tenu par le dispositif de tenue (5) sur le dispositif de pivotement (7),
dans lequel le conteneur (15, 17) est pivoté avec le dispositif de pivotement (7) de l'orientation de réception à l'orientation de vidange et
dans lequel les colis (2) du conteneur (15, 17) sont transportés au moins partiellement hors du conteneur (15, 17) par le dispositif convoyeur à courroie (8).

11. Procédé selon la revendication 10,
dans lequel le conteneur (15,17) est tenue avec une ouverture latérale (16) orientée vers le dispositif convoyeur à courroie (8) sur le dispositif de pivotement (7) et
dans lequel, de préférence, des colis (2) avec le dispositif convoyeur à courroie (8) dans la position de déchargement entrent en contact avec le dispositif convoyeur à courroie (8) via l'ouverture latérale (16) du conteneur (15, 17).

12. Procédé selon la revendication 10 ou 11,
dans lequel l'au moins un convoyeur à courroie (9) du dispositif convoyeur à courroie (8), au moins avec le dispositif convoyeur à courroie (8) dans la position de déchargement, est déplacé dans la direction de transport (T) et/ou dans lequel les convoyeurs à courroie (9) du dispositif convoyeur à courroie (8) prévus côte à côte sont déplacés progressivement de l'intérieur vers l'extérieur à une vitesse de transport plus élevée et/ou
dans lequel les colis (2) glissent au moins partiellement le long de la surface de transport (10) convexe du dispositif convoyeur à courroie (8) latéralement vers le bas sur au moins un convoyeur à courroie latérale (14) et/ou dans lequel les colis (2) sont séparés au moins partiellement le long de plusieurs convoyeurs à courroie latéraux (14) agencés, de préférence en alignement, l'un derrière l'autre.

13. Procédé selon l'une des revendications 10 à 12,
dans lequel les colis (2) sont transférés au moins partiellement du dispositif convoyeur à courroie (8) dans la position de déchargement dans la direction de transport (T) du dispositif convoyeur à courroie (8) à une unité de convoyeur à courroie (11) se raccordant, de préférence en alignement, au dispositif convoyeur à courroie (8) et
dans lequel, de préférence, les colis (2) transférés sont transportés au moins partiellement par l'unité de convoyeur à courroie (11) dans une direction de transport (T) au moins essentiellement parallèle à la direction de transport (T) du dispositif convoyeur à courroie (8) et/ou les convoyeurs à courroie (12) de l'unité convoyeur à courroie (11) prévus côte à côte sont respectivement déplacés progressivement de l'intérieur vers l'extérieur à une vitesse de transport plus élevée.

14. Procédé selon l'une des revendications 10 à 13,
dans lequel les colis (2) glissent au moins partiellement le long de l'unité de convoyeur à courroie (11) convexe latéralement vers le bas sur au moins un convoyeur à courroie latérale (14) et/ou en ce que les colis (2) sont séparés au moins partiellement le long de plusieurs convoyeurs à courroie latéraux (14) agencés, de préférence en alignement, l'un derrière l'autre, et/ou
dans lequel le conteneur (15, 17) est déplacé ou placé, dans l'orientation de réception du dispositif de pivotement (7), sur la surface d'appui (4) pour le conteneur (15, 147) et, de préférence, le conteneur (15, 17) se trouvant sur la surface d'appui (4) est tenue par le dispositif de tenue (5), en particulier reçu par le logement (3), pendant le pivotement du dispositif de pivotement (7).
